# EUROPÄISCHE PATENTANMELDUNG

(11) **EP 0 584 770 A1**
(43) Veröffentlichungstag der Anmeldung: **02.03.1994**
(21) Anmeldenummer: 93113453.0
(22) Anmeldetag: 24.08.1993
(51) Int. Cl.: B65G 47/84

(54) **Verfahren und Vorrichtung zum Aufbringen von Dosen auf Mandrels eines rotierenden Mandrelrades**

(30) Priorität: 25.08.1992 DE 4228124
(71) Anmelder: Herberts Gesellschaft mit beschränkter Haftung, D-42285 Wuppertal (DE)
(72) Erfinder: Schlinsog, Hans-Jürgen, D-42489 Wülfrath (DE); Kramer, Evert, D-42289 Wuppertal (DE)
(74) Vertreter: Türk, Gille, Hrabal, Leifert

(57) **Zusammenfassung**

Beschrieben werden ein Verfahren und eine Vorrichtung zum Aufbringen von einseitig offenen Dosen (1) auf Mandrels eines rotierenden Mandrelrades (5) mittels einer oder mehreren Zuführungseinrichtungen (7,9), mit denen die Dosen (1) einzeln zu den Mandrels (6) geführt werden. Die Dosen (1) werden dabei auf der Zuführungseinrichtung (7) am geschlossenen Dosenende (2) in achsparallel zu den Mandrels (6) ausgerichteter Weise gehalten und zentriert in der Verlängerung der Mandrelachse ausgerichtet auf die Mandrels (6) aufgezogen.

## Beschreibung

Die Erfindung betrifft ein Verfahren zum Laden von Dosen auf ein rotierendes Mandrelrad sowie eine Vorrichtung zur Durchführung des Verfahrens.

Dosen werden in der Lebensmittelindustrie für viele Zwecke eingesetzt. Insbesondere werden Dosen in der Getränkeindustrie zum Abfüllen von Getränken verwendet. Dabei werden die Dosen aus Rohlingen in Form von einseitig geschlossenen zylindrischen Hohlkörpern hergestellt. Diese weisen auf Grund der Herstellung eine dünne Wand (ca. 0,1 mm) und einen verstärkten Bodenteil (ca. 0,3 mm) auf. Um für die Lebensmittelindustrie geeignet zu sein, müssen diese Dosen einer Oberflächenbehandlung unterzogen werden. Beispielsweise können aus Korrosionsgründen oder aus Gründen der optischen Verbesserung der Dosen diese lackiert und/oder bedruckt werden. Das geschieht auf automatischen Lackier- oder Bedruckungsstationen. Diese bestehen im wesentlichen aus einem rotierenden Mandrelrad, das auf dem Umfang eine Anzahl von ebenfalls rotierenden Mandrels aufweist. Auf diese Mandrels werden die Dosen aufgezogen. Während der Rotation des Mandrelrades werden die Dosen an Lackier- und Bedruckungsvorrichtungen, z.B. Walzen, vorbeigeführt. Dadurch wird auf die Oberfläche der Dosen ein schützender sowie optisch hochwertiger Überzug hergestellt. Danach müssen die Dosen von den Mandrels bzw. dem Mandrelrad entfernt werden und der Überzug in einem Ofen getrocknet bzw. eingebrannt werden.

Das Aufziehen der Dosen auf die Mandrels geschieht so, daß die hergestellten Dosen über Vereinzelungsvorrichtungen nacheinander in eine Linie ausgerichtet werden. Aus dieser Linie werden sie auf das Mandrelrad überführt. Treten bei diesem Umsetzvorgang aus der Dosenreihe auf das Mandrelrad Defekte an den Dosen auf, z.B. durch Einbeulung der Dosenwand, Zerreißen der Dosenwand oder Deformieren des offenen Dosenendes, so müssen diese Dosen vor dem Lackieren bzw. Bedrucken aus dem Verarbeitungsprozeß entfernt werden. Die Lackier- und Bedruckungsvorrichtungen, z.B. Gummiwalzen, sind empfindlich gegen mechanische Beschädigungen, d.h. eine einzelne defekte Dose kann die Lackier- bzw. Bedruckungsvorrichtung zerstören. Danach muß diese ausgewechselt werden. Das führt zu erheblichen Stillstandszeiten und verursacht einen erheblichen Schaden.

Ist eine Dose defekt, wird sie, um die Lackiervorrichtung nicht zu zerstören, von dem Mandrel entfernt. Von dem leeren Mandrel muß die Lackier- oder Bedruckungsvorrichtung entfernt werden, um das Mandrel nicht zu verschmutzen. Dazu wird die Lackiervorrichtung von dem Mandrel weggetript, so daß sie dieses nicht berührt. Das führt dazu, daß die Dosen vor bzw. hinter einem leeren Mandrel keinen ordnungsgemäßen Überzug erhalten. Sie sind deshalb ebenfalls Ausschuß und müssen vernichtet werden.

Ursache von Beschädigungen der Dosen können beispielsweise ein erhöhter seitlicher Druck auf die dünne Dosenwand sein. Weiterhin dürfen die dünnwandigen Dosen nicht verkantet auf das Mandrel aufgezogen werden, da dabei Ausbeulungen oder Einreißungen des Dosenendes hervorgerufen werden können. Ebenfalls können die Dosen zerstört werden, wenn sie nicht ordnungsgemäß konzentrisch auf das Mandrel aufgezogen werden. Dieses rotiert sehr schnell und führt so zu einer Unwucht einer verkantet aufgesetzten Dose. Solche Dosen müssen aus dem Produktionsprozeß entfernt werden.

Bekannte Vorrichtungen zum Aufziehen der Dosen auf die rotierenden Mandrels arbeiten in der Weise, daß die Dosen vereinzelt werden und in Form einer Reihe unter seitlichem Druck auf die Peripherie des Mandrelrades hin gedrückt werden. Parallel zu jedem Mandrel in Verlängerung der Mandrelachse sind an dem Mandrelrad sogenannte Taschen befestigt. Diese haben eine ungefähr halbkreisförmige Form und dienen, dazu die Dose aus der Zuführung aufzunehmen und mit dem Mandrelrad mitzuführen. Während der Drehung des Mandrelrades wird die Dose durch eine Vorrichtung von der Wand der Tasche abgehoben.

Gleichzeitig wird in der Achse des Mandrels ein Unterdruck erzeugt. Damit wird das offene Ende der Dose auf das Mandrel aufgesaugt. Da das Mandrel während dieses Vorgangs schnell rotiert, ist es notwendig, daß die Dose zu diesem Zeitpunkt nicht mehr mit der Tasche in Kontakt kommen kann, da sonst die Dose zerstört wird. Deswegen ist es notwendig, daß die Dose vor dem Aufziehen auf das Mandrel von der Oberfläche der Tasche abgehoben wird. Für diesen Vorgang ist eine erhebliche Zeit notwendig, in der das Mandrelrad sich weiterdreht. Es bleibt daher keine ausreichende Zeit vor dem Lackieren für ein Entfernen der defekten Dosen und ein neues Beladen der Mandrels. Deshalb muß der Tripmechanismus der Lackiervorrichtung häufig zum Schutz von leeren Mandrels ausgeführt werden. Dieses Verfahren verringert die Produktivität.

Eine weitere bekannte Vorrichtung arbeitet in der Weise, daß die Taschen nicht am Mandrelrad in der Verlängerung der Mandrelachse befestigt sind, sondern daß über eine separate Vorrichtung Taschen mit Dosen für eine Zeit parallel zum Umfang des Mandrelrades in gleicher Geschwindigkeit geführt werden. Dabei müssen die Taschen gleichfalls eine Ausrichtung parallel zu den Mandrels aufweisen. Die Dosen werden dann nach dem gleichen Verfahren aus der Tasche auf das Mandrelrad aufgezogen wie oben beschrieben.

Um ein schnelles Beladen der Taschen zu ermöglichen, werden die Dosen mit Druck auf die Taschen geführt. Dieses geschieht seitwärts durch einen Druck auf die Dosenwände. Das führt zu einer erheblichen Gefahr der Verformung, z.B. der Verbeulung, der dünnen Dosenwand. Durch das Mitnehmen der Dosen aus der Zuführung in die Taschen werden diese ebenfalls einer mechanischen Beanspruchung unterworfen. Weiterhin wird es nach der plötzlichen Beschleunigung notwendig, die Dosen in den Taschen in eine stabile Lage zu bringen. Bewegung und Vibrationen der Dosen müssen abklingen. Erst nach diesem Zeitpunkt ist es möglich, die Dosen von den Taschen verwindungsfrei auf das Mandrel aufzuziehen. Da zum Aufziehen der Dosen auf das Mandrel diese von der Oberfläche der Taschen abgehoben werden müssen, ist die Beruhigung notwendig, um beim Aufziehen der Dosen ein gleichmäßiges Abheben von der Tasche zu ermöglichen, um eine Beschädigung zu vermeiden. Dieser Vorgang ist störanfällig, insbesondere bei höheren Geschwindigkeiten. Außerdem ist es schwierig, diese Vorrichtung genau zu justieren, was aber notwendig ist, um ein rasches Übergleiten der Dosen über das Mandrel ohne Verkanten sicherzustellen. Bei diesen verschiedenen Vorgängen besteht eine erhebliche Gefahr, daß die Dosen bei diesem Transport- und Übertragungsvorgang beschädigt werden.

Aufgabe der Erfindung ist daher die Bereitstellung einer Vorrichtung und eines Verfahrens, bei dem Dosen, insbesondere Nahrungsmitteldosen, z.B. Getränkedosen, auf schonende Art und Weise auf die Mandrels eines Mandrelrades aufgezogen werden können, um Beschädigungen der Dosen zu vermeiden.

Es hat sich gezeigt, daß diese Aufgabe dadurch gelöst werden kann, daß die Dosen aus einer Versorgungseinrichtung auf eine bewegliche Haltevorrichtung übertragen werden, die die Dosen nur am geschlossenen Dosenboden hält, dann mit dem offenen Dosenende in eine achsparallele zentrierte Lage zum Mandrel gebracht werden und aus dieser Position z.B. unter Verwendung von Unterdruck über das Mandrel gezogen werden.

Gegenstand der Erfindung sind daher ein Verfahren und eine Vorrichtung zum Aufbringen von einseitig offenen Dosen auf Mandrels eines rotierenden Mandrelrades, mittels einer oder mehreren Zuführungseinrichtungen, mit denen die Dosen einzeln zu den Mandrels geführt werden, das dadurch gekennzeichnet ist, daß die Dosen auf der Zuführungseinrichtung am geschlossenen Dosenende in achsparallel zu den Mandrels ausgerichteter Weise gehalten werden und zentriert in der Verlängerung der Mandrelachs ausgerichtet auf die Mandrels aufgezogen werden.

Durch die Halterung der Dosen an ihrem Dosenboden ist die Gefahr der mechanischen Beschädigung vermindert. Der Dosenboden besteht aus dem stabilsten Teil der einseitig offenen Dose. Deshalb ist er besonders geeignet, mechanische Kräfte aufzunehmen. Ebenso ist er wenig elastisch, so daß eine genaue Ausrichtung der Dose auf der Haltevorrichtung bei der Zuführung möglich ist.

Ein weiterer Vorteil der Halterung der Dose an dem Dosenboden ist darin gegeben, daß der Schwerpunkt der Dose nahe der Halterung der Dose liegt. Dadurch werden Vibrationen bzw. Schwingungen, die durch den Dosentransport hervorgerufen werden, auf ein Minimum beschränkt. Dadurch ist es erleichtert, die Dose exakt im Verhältnis zur Mandrelachse zu positionieren.

Die Halterung der Dose kann auf verschiedene Art und Weise erfolgen. Sie sind im Prinzip bekannt. So ist es beispielsweise möglich, daß die Dose mit Vakuum auf einer ebenen Fläche der Zuführvorrichtung gehalten wird. Dabei wird zwischen Dosenboden und Zuführeinrichtung ein Unterdruck gebildet, der die Dose auf der Unterlage hält. Weiterhin ist es möglich, daß die Dose durch magnetische Kräfte auf der Zuführvorrichtung gehalten wird. Geeignet sind beispielsweise Permanentmagnete oder auch Elektromagnete, die ein rasches Ein/Ausschalten der Haltevorrichtung erlauben. Eine weitere Möglichkeit besteht in mechanisch wirkenden Haltevorrichtungen, z.B. Halteklauen; diese können z.B. auf dem Rand der Zuführvorrichtung ausgebildet sein. Eine genaue Ausrichtung der Dose kann dadurch unterstützt werden, daß auf der Zuführvorrichtung Nute oder Erhebungen angebracht sind, die die Dose in einer geeigneten Position auf der Zuführvorrichtung ausrichten, in der sie dann fixiert werden.

Als Zuführvorrichtung ist es beispielsweise möglich, eine rotierende Scheibe einzusetzen. Diese enthält an ihrer Peripherie eine Anzahl von Vorrichtungen zum Halten von Dosen. Gleichzeitig kann sie gegebenenfalls mit Vorrichtungen zur Unterstützung des Ausrichtens von Dosen ausgerüstet sein. Diese rotierende Scheibe wird so im Verhältnis zum Mandrelrad bzw. zum Mandrel positioniert, daß sie in einer Stellung der Scheibe eine genaue achsparallele zentrierte Ausrichtung der gehaltenen Dose in Verlängerung eines Mandrels ermöglicht. Dabei ist es notwendig, daß an dieser Stelle das Mandrelrad bzw. die Zuführvorrichtung eine gleiche Bewegungsrichtung aufweisen. Je nach der Positionierung der rotierenden Scheibe muß diese entgegengesetzt zum Mandrelrad drehen, wenn die Drehachse sich außerhalb des Umfangs des Mandrelrades befindet, oder sie muß sich parallel zum Mandrelrad drehen, wenn sich die Drehachse innerhalb des Umfangs des Mandrelrades befindet. Es ist dabei selbstverständlich, daß der Abstand zwischen Dosenende und Mandrel so klein wie möglich gehalten wird, um ein einfaches Übergleiten der Dose auf das Mandrel zu ermöglichen. Gleichzeitig muß der Abstand so gewählt werden, daß keine Berührung der einzelnen Teile stattfinden kann.

Wenn die Position erreicht ist, in der sich die Dose achsparallel und zentriert zu einem leeren Mandrel befindet, wird die Dose von der Haltevorrichtung freigegeben. Sie wird dabei bevorzugt mit Vakuum von der Haltevorrichtung über das Mandrel gezogen oder sie wird unter Verwendung von Druckluft von der Haltevorrichtung auf das Mandrel geblasen. Gegebenenfalls können beide Möglichkeiten kombiniert werden. Da die Dose achsparallel und zentriert zum rotierenden Mandrel ausgerichtet ist, ist ein Verkanten der Dose bei diesem Aufziehvorgang nicht möglich. Der Aufziehvorgang kann daher mit erheblich höherer Geschwindigkeit durchgeführt werden als beim Arbeiten mit den bekannten Taschen. Der Zeitraum zum Aufziehen der Dosen wird so wesentlich verkürzt. Da die Dosen nur am geschlossenen Ende (Dosenboden) von der Haltevorrichtung gehalten, und zum Zeitpunkt des Aufziehens freigegeben werden, besteht keine Beschädigungsgefahr der Dosen bzw. der Haltevorrichtung durch das plötzliche Einsetzen des Rotierens der Dose auf dem Mandrel.

Eine weitere Ausführungsform der Vorrichtung zum Zuführen der Dosen besteht in einem beweglichen, flexiblen Transportband mit Haltevorrichtungen. Nach Ausrichtung der Dose achsparallel zu und zentriert über einem Mandrel wird die Dose von der Haltevorrichtung auf dem Transportband freigegeben und auf das Mandrel aufgezogen. Das Transportband kann z.B. als Endlosband ausgebildet sein und nach der Abgabe der Dosen auf das Mandrelrad über bekannte Vorrichtungen, z.B. eine Umlenkrolle, wieder zurückgeführt werden. Die Form und die Konstruktionsweise solcher beweglicher Endlostransportbänder mit Haltevorrichtungen für Dosen kann nach üblichen Prinzipien gestaltet werden. Sie können vom Fachmann auf einfache Art und Weise der Zuführung zu einem Mandrelrad angepaßt werden.

Der Vorgang der Aufnahme der Dosen auf die Zuführungsvorrichtung und der Weitergabe der Dosen auf das Mandrel erfordert nur ein kurze Zeit. Vibrationen, die durch das Aufnehmen der Dosen auf übliche Zuführungseinrichtungen entstehen können, lassen sich weitgehend vermeiden und klingen, sofern sie auftreten, rasch ab. Es ist daher eine sehr genaue Positionierung möglich. Dadurch kann der Ladevorgang auf das Mandrel wesentlich schneller und sicherer durchgeführt werden, als bei Anwendung der üblichen Taschen. Da eine längere Mitführung der Dosen achsparallel zum Umfang des Mandrelrades nicht notwendig ist, können die Zuführungsvorrichtungen der Dosen kleiner gebaut sein als dies bisher möglich war. Damit ist es möglich gegebenenfalls auch mehrere Zuführungsvorrichtungen nacheinander auf dem Umfang eines Mandrelrades vorzusehen. Die Steuerung der Zuführungsvorrichtungen z.B., die Zuführungsgeschwindigkeit, wie die Umdrehungsgeschwindigkeit, bzw. die Positionierung der Führungsvorrichtung über den Mandrels kann mit Unterstützung von automatischen Steuerungseinrichtungen, wie Rechnern bzw. Computern, erfolgen. Diese können z.B. auch dazu dienen, mehrere Zuführungseinrichtungen so zu steuern, daß nur leere Mandrels mit Dosen beladen werden.

Eine weitere Ausführungsform der erfindungsgemäßen Vorrichtung umfaßt nach der Zuführung von Dosen auf das Mandrelrad eine an sich bekannte Vorrichtung, die feststellt, ob das Mandrelrad ordnungsgemäß mit Dosen versehen wurde. In Drehrichtung des Mandrelrades nach dieser Vorrichtung ist dann eine weitere Zuführungsvorrichtung vorgesehen. Diese belädt nur Mandrels, die zu diesem Zeitpunkt noch keine Dosen aufgezogen haben. Durch diese Ausführungsform der erfindungsgemäßen Vorrichtung ist es möglich, daß der Tripmechanismus der Lackier- bzw. Bedruckungsvorrichtung, der eine Verschmutzung der leeren Mandrels verhindern soll, nicht ausgelöst werden muß. Dadurch wird der Arbeitsaufwand verringert und es entsteht erheblich weniger Ausschuß.

Die Zuführungsvorrichtungen können mit Dosen aus der Transportlinie nach an sich bekannten Verfahren beladen werden. Dabei können die Dosen beispielsweise vereinzelt auf die Zuführungsvorrichtung übergeben und in ihrer Position ausgerichtet werden, oder es ist auch möglich, daß die noch nicht vereinzelten Dosen, die in einer Reihe nebeneinander ankommen, direkt auf die Zuführungsvorrichtung aufgebracht werden. Solche Umsetzprozesse sind in der Verfahrenstechnik zur Bearbeitung bzw. zum Transport von zylindrischen Hohlkörpern weit verbreitet. Der Fachmann kann sie mit wenigen Überlegungen den erfindungsgemäßen Zwecken anpassen.

Die beigefügten Figuren erläutern die Erfindung an Hand von Beispielen, die bevorzugte Ausführungsformen der Erfindung darstellen.

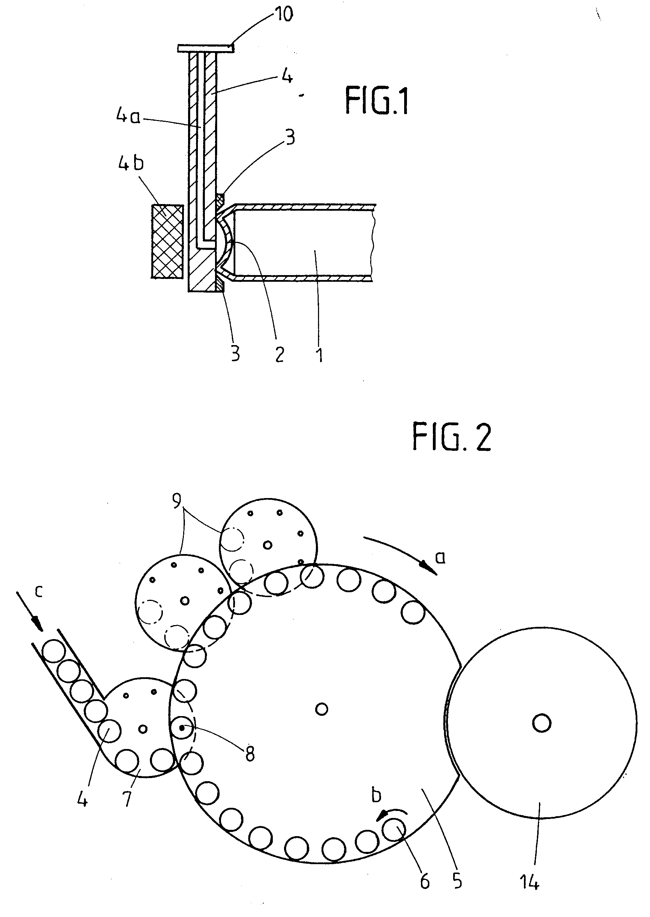

Figur 1 stellt einen Querschnitt durch eine Dose (1) und eine Haltevorrichtung (Halterung) (4) auf einer Zuführungseinrichtung (7) dar. Die Dose (1) wird mit dem geschlossenen Dosenende (Dosenboden) (2) an der Oberfläche der Zuführungsvorrichtung gehalten. Gegebenenfalls sind Vorsprünge (3) zum Ausrichten und Positionieren der Dose vorhanden. Die Haltevorrichtung (4) kann beispielsweise mit einem Kanal (4a) versehen sein, durch den Luft abgesaugt oder eingeblasen werden kann. Hierdurch kann ein Vakuum zwischen der Halterung (4) und dem geschlossenen Dosenende (2) ausgebildet werden, wodurch die Dose gehalten wird. Beim Einblasen von Luft kann die Dose abgeworfen werden. Die Haltevorrichtung (4) kann auch mit einem Magneten (4b), z.B. einem ein- und ausschaltbaren Elektromagneten versehen sein, mit dem die Dose (1) gehalten oder abgeworfen werden kann.

Figur 2 stellt eine Aufsicht auf ein Mandrelrad (5) mit einer Zuführungsvorrichtung dar. Die Zuführungsvorrichtung ist in diesem Fall als Scheibe (7) ausgebildet. Das Mandrelrad (5) weist auf dem Umfang mehrere gleichmäßig verteilte Mandrels (6) auf. Das Mandrelrad bzw. die Mandrels drehen sich jeweils in Pfeilrichtung (a;b). Die Zuführscheibe (7) befindet sich achsparallel zu dem Mandrelrad. Die Zuführungsscheibe (7) weist an der Peripherie die Haltevorrichtungen (4) für die Dosen auf. Am Punkt (8) sind ein Mandrel auf dem Mandrelrad, sowie eine Dose auf der Zuführungsvorrichtung achsparallel und zentriert zueinander ausgerichtet. An dieser Stelle wird die Dose von der Zuführungsvorrichtung (7) auf das Mandrel (6) aufgezogen, beispielsweise mittels Vakuum und gegebenenfalls zusätzlich mittels Druckluft. Gegebenenfalls können danach noch weitere Zuführungsvorrichtungen (9) zum Zuführen von Dosen zum Mandrelrad vorhanden sein. Nach den durch die Zuführungseinrichtungen gebildeten Aufgabestationen sind Bedruckungs- und/oder Lackiervorrichtungen (14) vorgesehen.

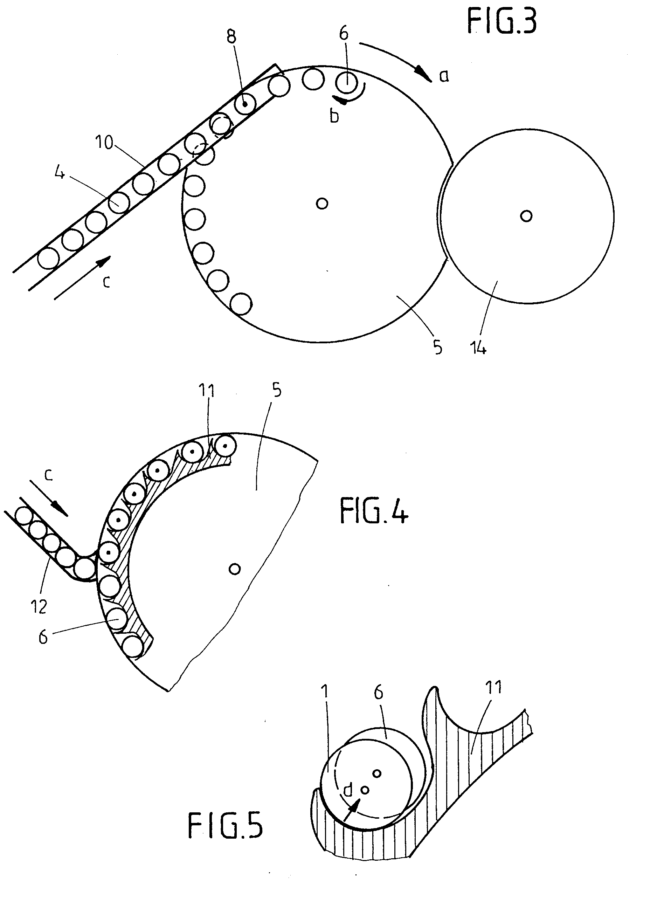

Figur 3 zeigt eine Aufsicht auf ein Mandrelrad (5) mit einer Zuführungsvorrichtung, die in Form eines endlosen Transportbandes (10) ausgebildet ist. Auf dem Mandrelrad (5) befinden sich die Mandrels (6). Das Transportband (10) der Zuführungsvorrichtung bewegt sich in Richtung des Pfeils c. Die Dosen werden von der Haltevorrichtung (4) in ausgerichteter Weise gehalten. In Position (8) sind die Dosen achsparallel zu einem Mandrel ausgebildet und können vom Transportband (10) auf das Mandrel (6) aufgezogen werden. Danach wird das Band über eine nicht dargestellte Umlenkrolle zurückgeführt.

Figur 4 zeigt eine Aufsicht auf eine Dosenzuführung nach dem Stand der Technik mit Mandrelrad (5) und Mandrel (6). Parallel zu jedem Mandrel befinden sich Taschen (11). Diese nehmen die Dosen aus einer Zuführungsvorrichtung (12) auf, in der sie seitlich in Richtung e gefördert werden. Nachdem die Dosen in den Taschen eine stabile Lage eingenommen haben werden sie von der Taschenwand abgehoben und auf die Mandrels aufgezogen.

Figur 5 zeigt einen Ausschnitt aus Figur 4, nämlich ein Mandrel (6), eine Tasche (11) und eine Dose (1). Um die Dose in eine zentrierte Lage zum Mandrel zu bringen, muß sie in aufwendiger Weise in Pfeilrichtung d von der Oberfläche der Tasche abgehoben werden. Erst in der abgehobenen, zentrierten Lage kann sie aus der Tasche entfernt und auf das Mandrel aufgezogen werden.

Durch das erfindungsgemäße Verfahren und die erfindungsgemäße Vorrichtung ist es möglich, den Aufziehvorgang von Dosen auf rotierende Mandrels von Mandrelrädern zu beschleunigen. Dabei treten erheblich weniger Fehler auf, die zu einer Beschädigung der Dosen führen können. Dadurch wird der Ausschuß bei der Herstellung von Dosen verringert. Ebenso werden Stillstandzeiten der Lackier- und Bedruckungsanlagen vermieden, da weniger defekte Dosen zu den Anlagen gelangen und sie zerstören. Ein weiterer Vorteil der erfindungsgemäßen Vorrichtung und des erfindungsgemäßen Verfahrens besteht darin, daß die rotierenden Massen deutlich vermindert werden, da keine Taschen auf dem Umfang des Mandrelrades erforderlich sind. Neben der vereinfachten Konstruktion ist eine ruhigere Drehweise erzielbar. Durch das erfindungsgemäße Verfahren und die erfindungsgemäße Vorrichtung wird die Effektivität der Lackier- bzw. Bedruckungsvorrichtung von Dosen wesentlich gesteigert.

## Patentansprüche

1. Verfahren zum Aufbringen von einseitig offenen Dosen auf Mandrels eines rotierenden Mandrelrades, mittels einer oder mehreren Zuführungseinrichtungen, mit denen die Dosen einzeln zu den Mandrels geführt werden, dadurch gekennzeichnet, daß die Dosen auf der Zuführungseinrichtung am geschlossenen Dosenende in achsparallel zu den Mandrels ausgerichteter Weise gehalten und zentriert in der Verlängerung der Mandrelsachse ausgerichtet auf die Mandrels aufgezogen werden.

2. Verfahren nach Anspruch 1, dadurch gekennzeichnet, daß die geschlossenen Dosenenden an der Zuführungseinrichtung durch Vakuum, magnetische Kräfte und/oder mechanisch gehalten werden.

3. Verfahren nach Anspruch 1 oder 2, dadurch gekennzeichnet, daß die Dosen durch Vakuum und/oder Druckluft von der Zuführungseinrichtung auf die Mandrels aufgezogen werden.

4. Verfahren nach einem der Ansprüche 1 bis 3, dadurch gekennzeichnet, daß mehrere Zuführungseinrichtungen verwendet werden, die über Steuerungseinrichtungen nur jeweils leere Mandrels beladen.

5. Vorrichtung zum Aufbringen von einseitig offenen Dosen (1) auf Mandrels (6) eines rotierenden Mandrelrades (5) mit einer Zuführungseinrichtung, dadurch gekennzeichnet, daß die Zuführungseinrichtung (7,10) mit Halterungen (4) zur achsparallelen Führung und zentrierten Aufgabe der Dosen (1) an die Mandrels (6) versehen ist und die Halterungen (4) so ausgebildet sind, daß sie die Dosen (1) nur an ihren geschlossenen Enden (2) halten.

6. Vorrichtung nach Anspruch 5, dadurch gekennzeichnet, daß die Zuführungseinrichtung (7,10) als rotierende Scheibe (7) oder als Endlostransportband (10) ausgebildet ist.

7. Vorrichtung nach einem der Ansprüche 5 oder 6, dadurch gekennzeichnet, daß die Zuführungseinrichtung als rotierende Scheibe (7) ausgebildet ist, die die Halterungen (4) peripher aufweist.

8. Vorrichtung nach Anspruch 5 oder 6, dadurch gekennzeichnet, daß die Zuführungseinrichtung als Endlostransportband (10) ausgebildet ist und nacheinander liegende Halterungen (4) aufweist.

9. Vorrichtung nach einem der Ansprüche 5 bis 8, dadurch gekennzeichnet, daß die Halterungen (4) einen oder mehrere Vorsprünge (3) zum Ausrichten und Positionieren der Dosen (1) aufweisen.

10. Vorrichtung nach einem der Ansprüche 5 bis 9, dadurch gekennzeichnet, daß die Halterungen (4) einen Kanal (4a) aufweisen, durch den Luft zur Ausbildung eines Vakuums zwischen der Halterung (4) und dem geschlossenen Dosenende (2) abgesaugt oder Luft zum Abstoßen der Dosen (1) eingeblasen werden kann.

11. Vorrichtung nach einem der Ansprüche 5 bis 9, dadurch gekennzeichnet, daß die Halterungen (4) einen Magneten (4b) aufweisen.

12. Vorrichtung nach einem der Ansprüche 5 bis 9, dadurch gekennzeichnet, daß die Halterungen (4) zur mechanischen Erfassung der geschlossenen Dosenenden (2) ausgebildet sind.

13. Vorrichtung nach einem der Ansprüche 5 bis 12, dadurch gekennzeichnet, daß sie Steuerungseinrichtungen zur Steuerung der Zuführungsgeschwindigkeit aufweist.

14. Vorrichtung nach einem der Ansprüche 5 bis 13, dadurch gekennzeichnet, daß sie mindestens zwei Zuführungseinrichtungen (7,10) aufweist, wobei zwischen jeweils zwei Zuführungseinrichtungen (7,10) eine Meßvorrichtung ausgebildet ist, die das ordnungsgemäße Aufbringen der Dosen (1) durch die vorhergehende Zuführungseinrichtung (7,10) feststellt und die nachfolgende Zuführungseinrichtung (7,10) so steuert, daß nur leere Mandrels beladen werden.
